# FASCICULE DE BREVET EUROPEEN

(11) **EP 2 788 208 B1**
(45) Date de publication et mention de la délivrance du brevet: **03.02.2016**
(21) Numéro de dépôt: 12806550.5
(22) Date de dépôt: 22.11.2012
(51) Int. Cl.: B60G 7/02, B60R 13/08, B62D 35/02

(54) **CAPOT DE PROTECTION POUR UN ÉLÉMENT DE SUSPENSION**
SCHUTZKAPPE FÜR EINEN AUFHÄNGUNGSLENKER.
PROTECTION GUARD FOR A SUSPENSION ELEMENT

(30) Priorité: 07.12.2011 FR 1161267
(43) Date de publication de la demande: 15.10.2014
(73) Titulaire: Peugeot Citroën Automobiles SA, 78140 Vélizy Villacoublay (FR)
(72) Inventeur: LOISEL, Sebastien, F-60600 Clermont (FR)
(86) Numéro de dépôt international: PCT/FR2012/052699
(87) Numéro de publication internationale: WO 2013/083896

(56) Documents cités:
- FR-A1- 2 899 516
- GB-A- 2 345 274

## Description

L'invention a trait aux trains arrière des véhicules automobiles.

Un train arrière comprend généralement un bras longitudinal dont une extrémité est articulée dans une chape, cette chape étant fixée au châssis du véhicule, et plus précisément à un longeron du châssis. Le brevet FR 2 899 516 décrit en détail un train arrière de véhicule automobile.

L'articulation du bras dans la chape est un point sensible du train arrière puisque les mouvements de rotation du bras par rapport à la chape, qui accompagnent le pompage des suspensions, sont incessants lors du roulage.

Il apparaît dès lors nécessaire, pour préserver l'amortissement du véhicule, de protéger l'articulation de la pollution ambiante, notamment des projections d'eau, de boue et de poussière dues au roulage.

Un premier objectif est de proposer un train arrière de véhicule dont la protection contre la pollution au niveau de l'articulation du bras soit efficace.

Un deuxième objectif est de proposer un train arrière de véhicule dont le montage soit simple.

A cet effet, il est proposé, en premier lieu, un train arrière de véhicule automobile, qui comprend un bras longitudinal, une chape dans laquelle le bras est monté à rotation, la chape étant fixée sur un châssis du véhicule, le train arrière comprenant en outre un capot de protection de la chape, muni d'un corps apte à venir recouvrir la chape, et d'une languette recourbée formée en saillie sur une paroi frontale du corps, apte à être introduite au travers d'une lumière formée dans une paroi frontale de la chape.

Il est proposé, en deuxième lieu, un véhicule automobile équipé d'un tel train arrière.

Le capot de protection de la chape présente une grande facilité de montage, grâce à sa languette qu'il est aisé d'introduire dans la lumière formée dans la chape. La languette étant recourbée, l'opérateur peut orienter le capot sensiblement perpendiculairement à la chape, et ainsi avoir une bonne visibilité. Une fois la languette introduite dans la lumière de la chape, il suffit à l'opérateur d'opérer un basculement du capot autour de sa languette.

Diverses caractéristiques supplémentaires peuvent être prévues, seules ou en combinaison :
- la languette est formée au voisinage d'un bord supérieur du capot ;
- la languette présente une section arrière droite, par laquelle elle se raccorde à la paroi frontale du corps, et une section avant recourbée dans le prolongement de la section arrière ;
- le capot comprend une paroi arrière dans laquelle est perché un trou pour le passage d'un organe de fixation du capot sur la chape ;
- le capot comprend un méplat dans lequel est percé un trou pour le passage d'un organe de fixation du capot sur la chape ;
- le capot comprend des échancrures sur son pourtour, destinées à épouser la forme de la chape ;
- la languette est munie d'un ou plusieurs raidisseurs.

D'autres objets et avantages de l'invention apparaîtront à la lumière de la description d'un mode préféré de réalisation, faite ci-après en référence aux dessins annexés dans lesquels :
- la figure 1 est une vue en perspective de dessous d'un train arrière de véhicule automobile en cours d'assemblage ;
- la figure 2 est une vue en perspective, par l'avant, du train arrière de la figure 1 ;
- la figure 3 est une vue de côté du train arrière des figures 1 et 2 ;
- la figure 4 est une vue en perspective de dessous d'un capot de protection pour un train arrière tel que représenté sur les figures 1 à 3 ;
- la figure 5 est une vue en perspective de dessus du capot de la figure 4 ;
- la figure 6 est une vue en perspective de dessous montrant le train arrière avec le capot monté ;
- la figure 7 est une vue en perspective de dessus montrant le train arrière de la figure 6, capot monté.

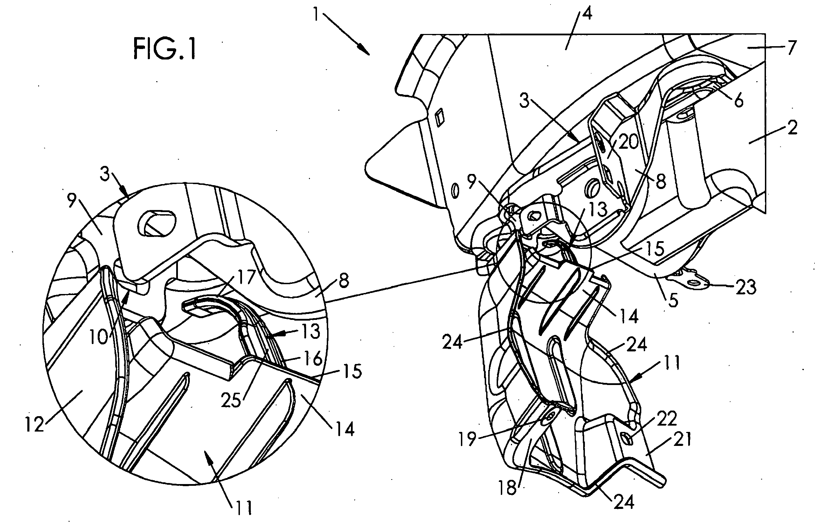

Sur la figure 1 est représenté un train **1** arrière de véhicule automobile. Ce train **1** arrière comprend un bras **2** longitudinal à une extrémité arrière duquel est montée une roue arrière (non représentée).

Le train **1** arrière comprend en outre une chape **3** fixée sur un longeron **4** du châssis du véhicule et dans laquelle le bras **2** est monté à rotation par une extrémité **5** avant.

Comme on le voit sur la figure 1, la chape **3** comprend une platine **6,** par laquelle elle est fixée sur une face **7** inférieure du longeron **4**, et deux flasques **8** latéraux formés en saillie à partir de la platine **6,** entre lesquels est reçue l'extrémité **5** avant, conformée en cylindre, du bras **2.**

La chape **3** comprend en outre une paroi **9** frontale, dans laquelle est formée une lumière **10** oblongue ou boutonnière, au voisinage de la platine **6.**

Afin de protéger l'articulation du bras **2** dans la chape **3** contre la pollution due au roulage du véhicule, le train **1** arrière comprend en outre un capot **11** de protection de la chape **3.**

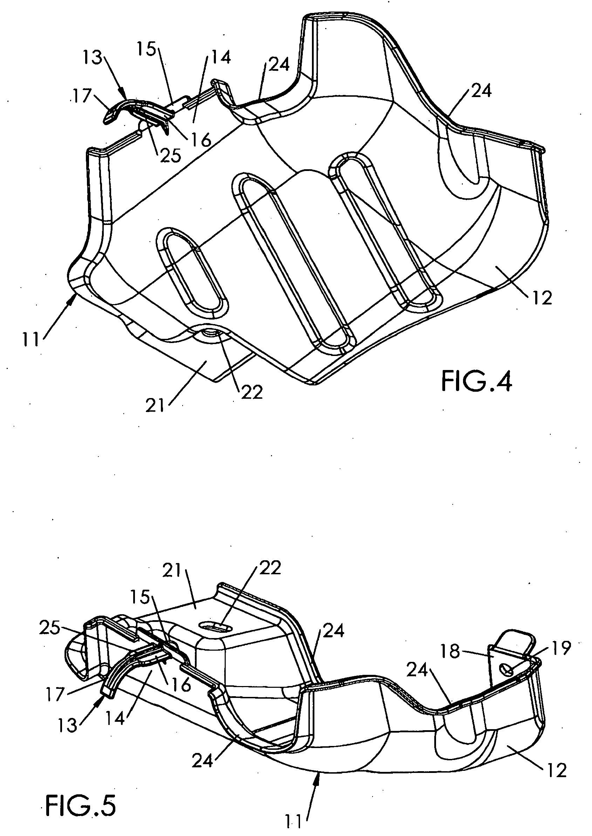

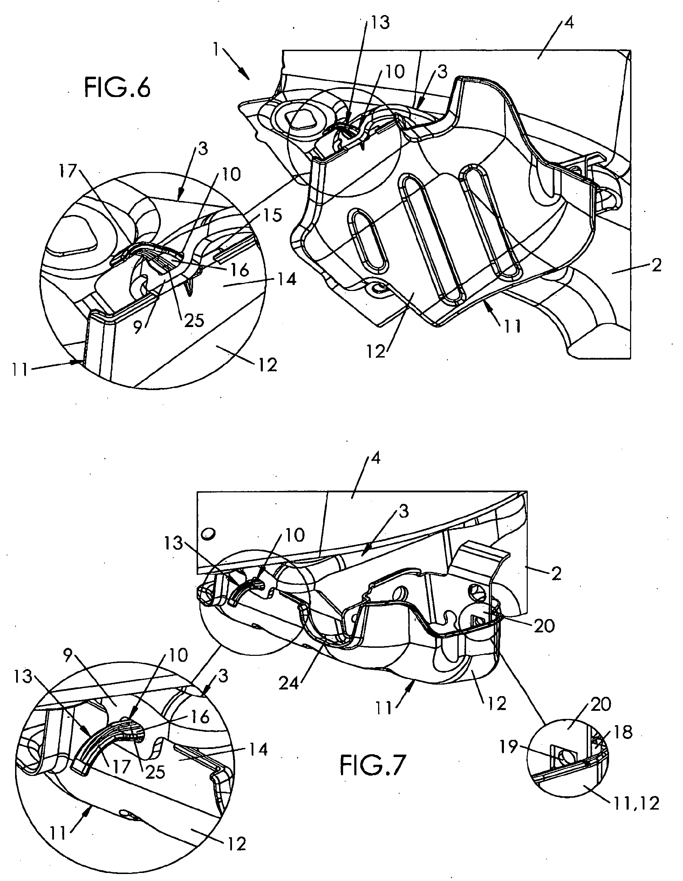

Ce capot **11,** représenté en cours de montage sur la chape **3** sur les figures 1 à 3, individuellement sur les figures 4 et 5, et en position montée sur les figures 6 et 7, comprend un corps **12** creux en forme de coupe apte à venir recouvrir la chape **3** par-dessous.

Le capot **11** est muni d'une languette **13** recourbée formée en saillie sur une paroi **14** frontale du corps **12,** cette languette **13** étant apte à être introduite au travers de la boutonnière **10.**

Comme cela est bien visible sur les figures 4 et 5, la languette **13** est formée au voisinage d'un bord **15** supérieur du capot, qui vient s'emboîter dans une portion avant de la chape **3,** entre les flasques **8** et la paroi **9** frontale.

La languette **13** est conformée en crochet ; elle présente une section **16** arrière droite, par laquelle elle se raccorde à la paroi **14** frontale du corps **12,** et une section **17** avant recourbée en arc de cercle, qui s'étend dans le prolongement de la section **16** arrière.

Selon un mode de réalisation illustré sur les figures, et come cela apparaît clairement sur la figure 7, la section **16** arrière est de largeur supérieure à la section **17** avant. De la sorte, l'introduction de la section **17** avant dans la boutonnière **10** est aisée grâce à la relative étroitesse de la section **17** avant, tandis que le jeu latéral du capot **11** par rapport à la chape **3** est minimisé, grâce à la largeur de la section **16** arrière qui s'étend au travers de la boutonnière **10** en position montée du capot **11.**

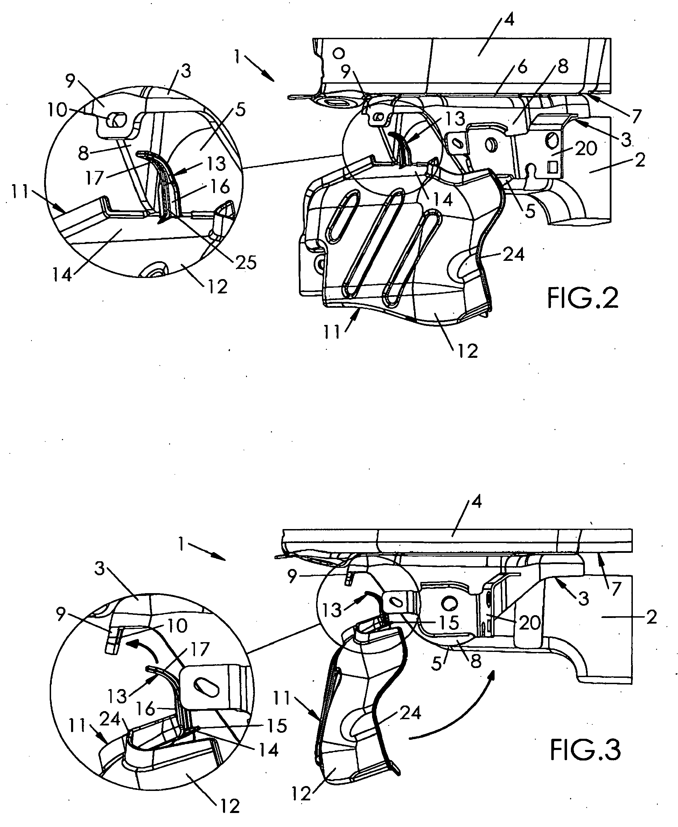

Comme on le voit sur la figure 3, la paroi **14** frontale de la chape **3** ne s'étend pas à angle droit par rapport à la platine **6** mais forme par rapport à celle-ci un angle ouvert, ce qui facilite l'introduction de la languette **13** dans la boutonnière **10.**

La languette **13** remplit une double fonction.

Premièrement, elle permet un pré-positionnement du capot **11** (tenu verticalement, comme illustré sur les figures 1 à 3) par rapport à la chape **3** lors du montage du capot **11,** la languette **13** étant introduite longitudinalement depuis l'arrière vers l'avant et depuis le bas vers le haut, comme illustré par la flèche dans l'encart de détail de la figure 3.

Deuxièmement, la languette **13** contribue à la tenue du capot **11** par rapport à la chape **3** en étant maintenue en position dans la boutonnière **10,** comme illustré sur les figures 6 et 7.

Afin de compléter la fixation du capot **11** sur la chape 3, le capot **11** comprend, percé dans une paroi **18** arrière, un trou **19** pour le passage d'un organe de fixation (tel qu'une vis ou une agrafe) du capot **11** sur une patte **20** latérale interne de la chape **3.**

De même, le capot **11** comprend, dans un méplat **21** formé latéralement dans le corps **12,** un autre trou **22** pour le passage d'un autre organe de fixation (tel qu'une vis ou une agrafe) du capot **11** sur une patte **23** latérale externe de la chape **3.**

Afin de colmater au mieux la jonction entre la chape **3** et le capot **11,** celui-ci est muni, sur son pourtour, d'échancrures **24** destinées à épouser la forme de la chape **3.**

Afin de garantir une bonne tenue de la languette **13** tant lors du montage du capot **11** qu'une fois le capot **11** en place sur la chape **3,** la languette **13** est de préférence munie d'un ou plusieurs raidisseurs **25** sur une face supérieure et/ou sur une face inférieure.

La présence de la languette **13,** et sa forme recourbée, facilitent le montage du capot **11** sur la chape **3** lors du montage du train 1 arrière (ou lors de toute intervention sur celui-ci postérieure à la mise en circulation du véhicule). Une fois la languette **13** introduite dans la boutonnière **10,** ce qui est relativement aisé, il suffit de basculer le capot **11** vers le haut en le faisant pivoter autour de l'axe de la boutonnière **10.** Cette opération est simple et rapide. Il reste alors à compléter la fixation du capot **11** au moyen de vis ou d'agrafes qui viennent se prendre dans les pattes **20, 23** de la chape **3** au travers des trous **19, 22.**

## Revendications

1. Train **(1)** arrière de véhicule automobile, qui comprend un bras **(2)** longitudinal, une chape **(3)** dans laquelle le bras **(2)** est monté à rotation, la chape **(3)** étant fixée sur un châssis du véhicule, **caractérisé en ce qu'**il comprend un capot **(11)** de protection de la chape **(3),** muni d'un corps **(12)** apte à venir recouvrir la chape **(3),** et d'une languette **(13)** recourbée formée en saillie sur une paroi **(14)** frontale du corps **(12),** apte à être introduite au travers d'une lumière **(10)** formée dans une paroi **(9)** frontale de la chape **(3).**

2. Train **(1)** arrière selon la revendication 1, **caractérisé en ce que** la languette **(13)** est formée au voisinage d'un bord **(15)** supérieur du capot **(11).**

3. Train **(1)** arrière selon la revendication 1 ou la revendication 2, **caractérisé en ce que** la languette **(13)** présente une section **(16)** arrière droite, par laquelle elle se raccorde à la paroi **(14)** frontale du corps **(12),** et une section **(17)** avant recourbée dans le prolongement de la section **(16)** arrière.

4. Train **(1)** arrière selon l'une des revendications 1 à 3, **caractérisé en ce que** le capot **(11)** comprend une paroi **(18)** arrière dans laquelle est percé un trou **(19)** pour le passage d'un organe de fixation du capot **(11)** sur la chape **(3).**

5. Train **(1)** arrière selon l'une des revendications précédentes, **caractérisé en ce que** le capot **(11)** comprend un méplat **(21)** dans lequel est percé un trou **(22)** pour le passage d'un organe de fixation du capot **(11)** sur la chape **(3).**

6. Train **(1)** arrière selon l'une des revendications précédentes, **caractérisé en ce que** le capot **(11)** comprend des échancrures **(24)** sur son pourtour, destinées à épouser la forme de la chape **(3).**

7. Train **(1)** arrière selon l'une des revendications précédentes, **caractérisé en ce que** la languette **(13)** est munie d'un ou plusieurs raidisseurs **(25).**

8. Véhicule automobile équipé d'un train **(1)** arrière selon l'une des revendications précédentes.

## Patentansprüche

1. Hinterradaufhängung (1) eines Kraftfahrzeugs, die einen Längsarm (2) umfasst, einen Gabelkopf (3), in dem der Arm (2) in Rotation montiert ist, wobei der Gabelkopf (3) auf einem Fahrgestell des Fahrzeugs befestigt ist, **dadurch gekennzeichnet, dass** sie eine Abdeckhaube (11) zum Schutz des Gabelkopfs (3) umfasst, ausgestattet mit einem Körper (12), der ausgelegt ist, um den Gabelkopf (3) abzudecken, und eine gekrümmte Lasche (13), die hervorspringend auf einer vorderen Wand (14) des Körpers (12) gebildet ist, ausgelegt, um durch eine Öffnung (10) eingeführt zu werden, die in einer vorderen Wand (9) des Gabelkopfes (3) gebildet ist.

2. Hinterradaufhängung (1) nach Anspruch 1, **dadurch gekennzeichnet, dass** die Lasche (13) in der Nähe eines oberen Rands (15) der Abdeckhaube (11) gebildet ist.

3. Hinterradaufhängung (1) nach Anspruch 1 oder Anspruch 2, **dadurch gekennzeichnet, dass** die Lasche (13) einen geraden hinteren Abschnitt (16) aufweist, durch den sie sich mit der vorderen Wand (14) des Körpers (12) verbindet, und einen gekrümmten vorderen Abschnitt (17) in der Verlängerung des hinteren Abschnitts (16).

4. Hinterradaufhängung (1) nach einem der Ansprüche 1 bis 3, **dadurch gekennzeichnet, dass** die Abdeckhaube (11) eine hintere Wand (18) umfasst, in die ein Loch (19) für den Durchgang eines Organs zur Befestigung der Abdeckhaube (11) auf dem Gabelkopf (3) gebohrt ist.

5. Hinterradaufhängung (1) nach einem der vorhergehenden Ansprüche, **dadurch gekennzeichnet, dass** die Abdeckhaube (11) eine abgeflachte Stelle (21) umfasst, in die ein Loch (22) für den Durchgang eines Organs zur Befestigung der Abdeckhaube (11) auf dem Gabelkopf (3) gebohrt ist.

6. Hinterradaufhängung (1) nach einem der vorhergehenden Ansprüche, **dadurch gekennzeichnet, dass** die Abdeckhaube (11) Aussparungen (24) auf ihrem Umfang umfasst, die ausgelegt sind, um die Form des Gabelkopfes (3) zu übernehmen.

7. Hinterradaufhängung (1) nach einem der vorhergehenden Ansprüche, **dadurch gekennzeichnet, dass** die Lasche (13) mit einem oder mit mehreren Versteifungselementen (25) ausgestattet ist.

8. Kraftfahrzeug, ausgestattet mit einer Hinterradaufhängung (1) nach einem der vorhergehenden Ansprüche.

## Claims

1. Motor vehicle rear axle (1) that comprises a longitudinal arm (2), a clevis (3) in which the arm (2) is mounted for rotation, the clevis (3) being fixed to the chassis of the vehicle, **characterised in that** it comprises a cover (11) protecting the clevis (3), provided with a body (12) able to cover the clevis (3), and a curved tongue (13) formed projecting on a front wall (14) of the body (12), able to be introduced through an aperture (10) formed in a front wall (9) of the clevis (3).

2. Rear axle (1) according to claim 1, **characterised in that** the tongue (13) is formed in the vicinity of a top edge (15) of the cover (11).

3. Rear axle (1) according to claim 1 or claim 2, **characterised in that** the tongue (13) has a straight rear section (16) by means of which it is connected to the front wall (14) of the body (12), and a curved front section (17) in line with the rear section (16).

4. Rear axle (1) according to one of claim 1 to 3, **characterised in that** the cover (11) comprises a rear wall (18) in which a hole (19) is pierced for passage of a member for fixing the cover (11) to the clevis (3).

5. Rear axle (1) according to one of the preceding claims, **characterised in that** the cover (11) comprises a flat (21) in which a hole (22) is pierced for passage of a member for fixing the cover (11) to the clevis (3).

6. Rear axle (1) according to one of the preceding claims, **characterised in that** the cover (11) comprises recesses (24) on its periphery, intended to match the shape of the clevis (3).

7. Rear axle (1) according to one of the preceding claims, **characterised in that** the tongue (13) is provided with one or more stiffeners (25).

8. Motor vehicle equipped with a rear axle (1) according to one of the preceding claims.
